# EUROPEAN PATENT APPLICATION

(11) **EP 2 549 312 A1**
(43) Date of publication of application: **23.01.2013**
(21) Application number: 11756467.4
(22) Date of filing: 15.03.2011
(51) Int. Cl.: G02B 6/122

(54) **OPTICAL WAVEGUIDE AND OPTICAL WAVEGUIDE DEVICE**

(30) Priority: 17.03.2010 JP 2010060505
(71) Applicant: NEC Corporation, Tokyo 108-8001 (JP)
(72) Inventor: WATANABE, Shinya, Tokyo 108-8001 (JP)
(74) Representative: Heunemann, Dieter
(86) International application number: PCT/JP2011/056687
(87) International publication number: WO 2011/115285

(57) **Abstract**

Optical path length difference should be correctly controlled for a pair of optical waveguides even in the pair of the optical waveguides which include combination of a large number of curved waveguide portions.

A pair of optical waveguides include curved sections, wherein the curved section has the shape including arcuate waveguide portions which have the same curvatures, and wherein the optical waveguides have the same number of the arcuate waveguide portions.

## Description

### TECHNICAL FIELD

The present invention relates to an optical waveguide having curved sections and specifically relates to an optical waveguide having curved sections whose deviation of optical path length can be controlled.

More specifically, the present invention relates to an optical waveguide and an optical waveguide device optical waveguide for which the deviation of the mutual optical path length difference in an optical waveguide having a pair of curved sections can be controlled.

### BACKGROUND ART

An optical waveguide device fabricated by PLC (Planar Light wave Circuit) technology capable of integration and mass production is effective for an optical switch and an optical modulator used for an optical network system. With the same fine processing technology used in semiconductor integrated circuit manufacturing process, PLC technology forms an optical waveguide with the various shapes on the substrate.

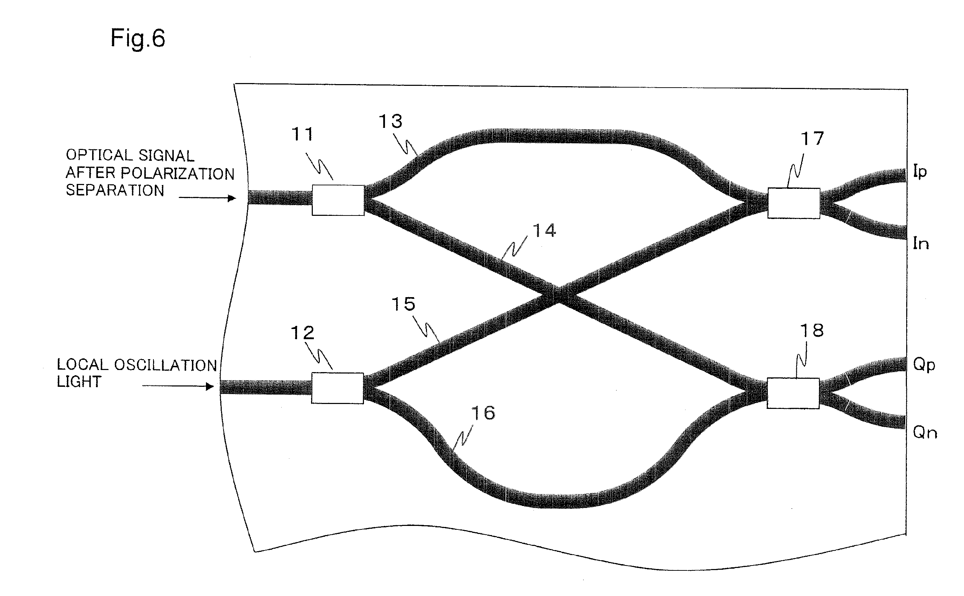

As an example of an optical waveguide circuit, Fig. 6 indicates general composition of 90 degree optical hybrid interferometer for taking out topology information from an optical signal after polarization separation.

The 90 degree optical hybrid interferometer of Fig. 6 includes optical splitting devices 11 and 12, optical waveguide arms 13-16 and optical couplers 17 and 18 with two inputs and two outputs.

In this optical waveguide circuit, optical lengths of two arms 13 and 14 which divide the optical signal are equal each other, and the optical path length of arm 15 is longer than that of arm 14 by λ/(4n) among two arms which divide local oscillation light. Herein, n is equivalent refractive index of the waveguide and λ is wavelength of light. Thus, by giving the optical path length difference correctly, the required interfering signal can be obtained in this 90 degree optical hybrid interferometer.

Further, in order to adjust the length of the respective arms, the shape of the optical waveguides needs to be adjusted.

An optical waveguide having curved sections generally includes combination of arcuate curved waveguides and straight line waveguides.

However, a gap occurs between the waveguide center and the electric field strength peak position of propagating light at the curved section of the optical waveguide, and the actual optical path length of the light propagating in the waveguide varies depending on the shape of the respective optical waveguides. In a part where the curve direction changes, that is, a part which becomes the inflection point of the optical waveguide and a part which becomes a connection point of a curved section and straight section, a difference in electric field strength peak position of propagating light forms. It is well known that the gap of these electric field strength peak positions causes the generation of coupling loss.

A technological example for solving such problem is described in patent document 1. In the optical waveguide described in patent document 1, it is avoided to generate coupling loss by setting the center axis of the optical waveguide to be discontinuous in front and behind the section which becomes the inflection point or the section which becomes the contact point between curved section and straight section and by providing a step so that the electric field strength peak position may be identical in front and behind the part.

A width of the step, that is, an offset amount is determined based on a calculated value of the gap amount between the peak position of the electric field strength of the optical signal which propagates in the optical waveguide and the waveguide center. The theoretical value of this gap width varies depending on relative refractive index difference, core size or curvature of the optical waveguide. For example, when the curvature of the optical waveguide is different, the gap amount between the waveguide center and the electric field strength peak position is also different. As a result, when the arc sections are intermixed whose curvatures are different in the curved section of the respective arms, the above-mentioned offset amount will also be different, and then the design becomes intricate. For this reason, the curved section of the arm is composed of the combination of arcs whose curvature are identical in all, and the arm length is adjusted over the full length so that the desired condition may be satisfied by the combination of the lengths of respective curving waveguides which composes the curved section and the length of the optical waveguide of straight section.

[Patent document 1] Japanese Patent Application Laid-Open No. 1997-288219

### SUMMARY OF INVENTION

### [Technical Problem]

However, it is difficult that the technology mentioned above correctly controls the optical path length of respective optical waveguides whose shapes are different in the optical waveguide device which needs to strictly control the optical path length difference in the optical waveguide which forms a counter pair like a 90 degree optical hybrid interferometer.

In particular, when a pair of the optical waveguide constituted by combining a large number of arc sections respectively, it is difficult to control the optical path length difference in the optical waveguide pairs strictly.

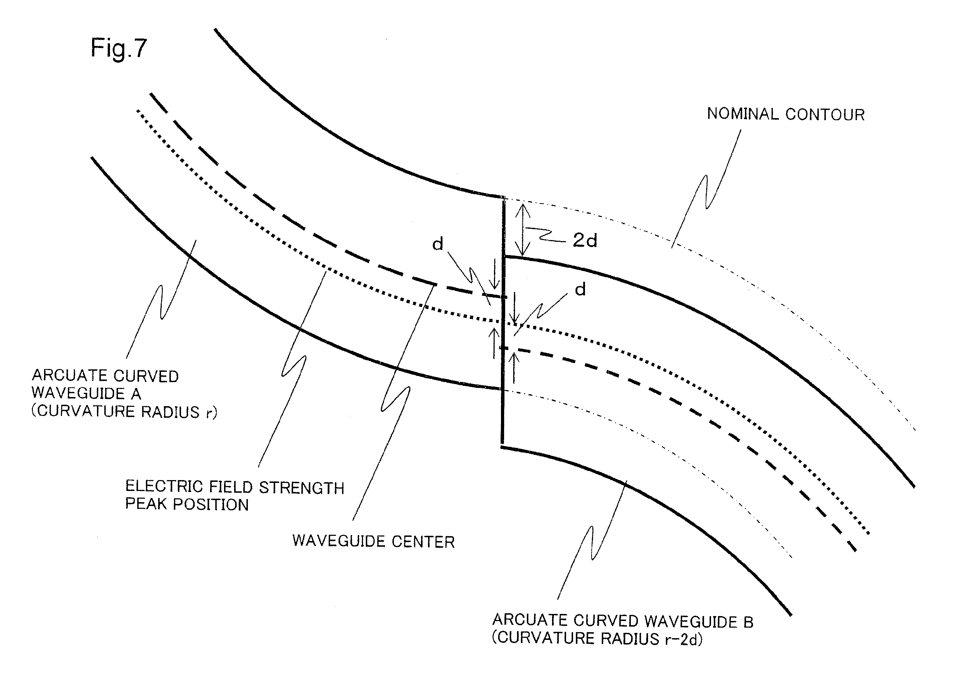

That is, if the gap amount of the waveguide center and the electric field strength peak position in the curved section in the optical waveguide can be grasped correctly, the actual optical path length can be designed by the desired value. As shown in Fig. 7, by setting up the offset from the nominal contour according to the gap amount between the waveguide center and the electric field strength peak position, the composition can be provided so that the electric field strength peak positions may be identical in the part which becomes the inflection point and the part which becomes the contact point between the curving section and straight section. However, for example, in case of the above-mentioned 90 degree optical hybrid interferometer, because the value of the offset amount will be usually no more than 0.5µm of small scale, it is difficult to estimate the optimum value correctly. In addition, because the design parameters of the optical waveguide include manufacturing fluctuation, the actual offset amount also fluctuates by the minute value.

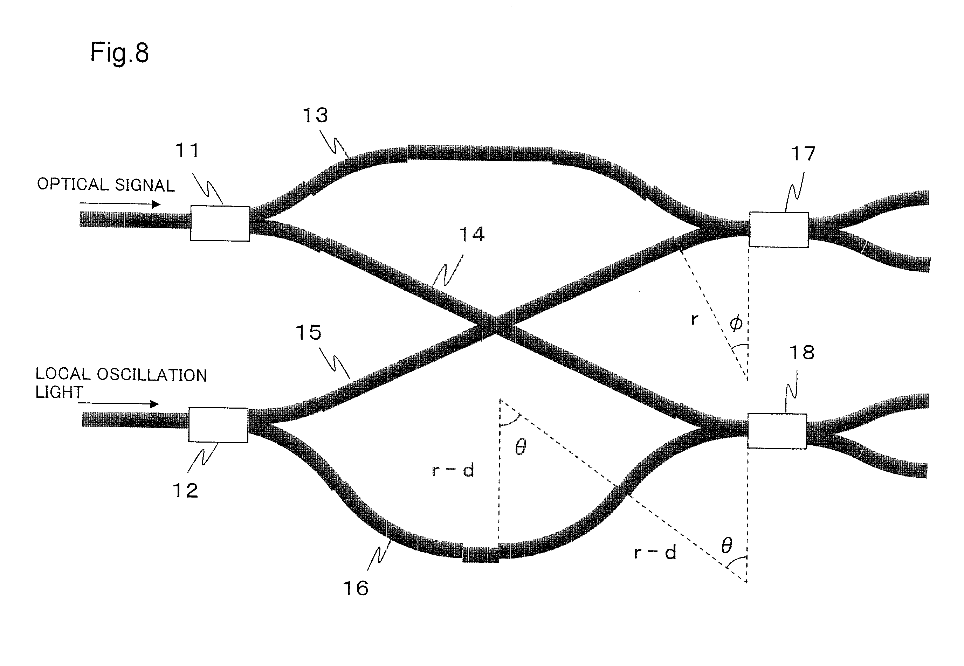

For example, Fig. 8 is the schematic diagram which shows the state that the offset is set up based on the calculated value of the estrangement amount between the waveguide center and the electric field strength peak position or the experimental result in the curved waveguide which composes the above-mentioned 90 degree optical hybrid interferometer. The nominal contour of the arms 15 and 16 of the 90 degrees optical hybrid interferometer is composed of the combination of the arcuate curved waveguide with radius r and the center angles φ and θ (in which the arc length will be rφ and rθ respectively) and the straight waveguide, here. Further, radius r of the curved waveguide is set to the value based on the waveguide center. Supposing the estrangement amount between the waveguide center and the electric field strength peak position is estimated to be d here, the offset amount from the nominal contour for compensating the discrepancy of the electric field strength peak position at the inflection point part as shown in Fig. 7 will be 2d.

As shown in Fig. 8, this offset can be provided by setting up a step from the nominal contour so that the radius of the curved waveguide portion may be r-d. Arm 16 possesses four curved waveguides with radius r-d and makes both of those center angles and the estrangement amounts between the waveguide center and the mode center to be θ and d respectively here. The total distance of the light propagation in whole of four curved waveguide portions by setting up the offset amounts to 4rθ.

It is supposed that the position discrepancy (offset estimation error) takes place which is formed between the actual electric field strength peak position and the designed electric field strength peak position by the manufacturing deviation and the lack of the calculation accuracy in design, and the gap amount between the waveguide center and the electric field strength peak position has shifted from calculated value d by Δd. In this case, the optical path length in four curved waveguide parts will shift by 4θ x Δd in total.

On the other hand, two curved waveguides are connected to arm 15, and the total distance through which the light passes in two whole curved waveguide portions is 2rφ. Supposing that there is offset estimation error of Δd concerning to these, the optical path length in the curved waveguide portion similarly shifts by 2φ x Δd in total. As a result, the optical path length difference between the arms 14 and 15 is apart from the design value by (4θ-2φ)x Δd.

When θ=π/6, φ=π/4 and Δd=0.03 µm are set for example in the 90 degree optical hybrid interferometer of Fig. 8, the estrangement amount of the optical path length difference from the design value will be 0.016 µm.

The optical path length difference for realizing the 90 degree hybrid function is expressed by λ/(4n) where the wavelength of the propagating light and the equivalent refractive index of the waveguide are expressed by λ and n respectively, and becomes approximately 0.265 µm for the wavelength of 1550nm and the refractive index of the optical waveguide of 1.46, for example. Supposing the optical path length difference shifts by ±0.015 µm, the hybrid angle varies by ±5°.

In OIF (Optical Internetworking Forum) which is an industry association for promoting the high-speed data communication, it is said that the hybrid angle required for the signal demodulation shall be within 90 ±5°.

The wavelength dependency and the temperature dependency of the hybrid angle in the available wavelength band of the actual device have to be considered and the optical path length difference needs to be controlled into the level smaller than 0.015 µm.

In contrast, as mentioned above, the fluctuation of the optical path length difference increases by the change of the offset amount in the configuration of Fig. 8. It causes the problem that the precision of the hybrid angle is injured and the yield rate of manufacturing is decreased.

The object of the present invention is to solve the above-mentioned problem, and to provide the optical waveguide and the optical waveguide device whose optical path length difference can be correctly controlled for a pair of optical waveguides even in the pair of the optical waveguides which include combination of a large number of curved waveguide portions.

### Solution to Problem

Optical waveguides of the present invention are a pair of optical waveguides including curved sections. The optical waveguides are characterized in that the curved section has the shape including arcuate waveguide portions which have the same curvatures, and the optical waveguides have the same number of the arcuate waveguide portions.

### Advantageous Effects of Invention

According to the present invention, the optical waveguide circuit and the optical waveguide device including a pair of the optical waveguides with combination of a large number of curved waveguide portions can be provided, with optical path length difference for the pair can be correctly controlled.

### BRIEF DESCRIPTION OF DRAWINGS

Fig. 1 is a schematic diagram which shows the composition of the optical waveguide of first exemplary embodiment of the present invention.
Fig. 2 is a schematic diagram which shows the composition of the 90 degree optical hybrid interferometer of second exemplary embodiment of the present invention.
Fig. 3 is a schematic diagram which shows the composition of the 90 degree optical hybrid interferometer of third exemplary embodiment of the present invention.
Fig. 4 is a schematic diagram which shows the composition of the 90 degree optical hybrid interferometer of fourth exemplary embodiment of the present invention.
Fig. 5 is a schematic diagram which shows the state of the mode difference in a joint portion of the optical waveguide.
Fig. 6 is a schematic diagram which shows an exemplary configuration of a general 90 degree optical hybrid interferometer.
Fig. 7 is a schematic diagram which shows an example of the composition of the offset in the joint between the curved waveguides.
Fig. 8 a schematic diagram which shows a general composition and design parameters of the optical waveguide of the 90 degree optical hybrid interferometer.

### DESCRIPTION OF EMBODIMENTS

Next, exemplary embodiments of the present invention will be described with reference to drawings.

### [The first exemplary embodiment]

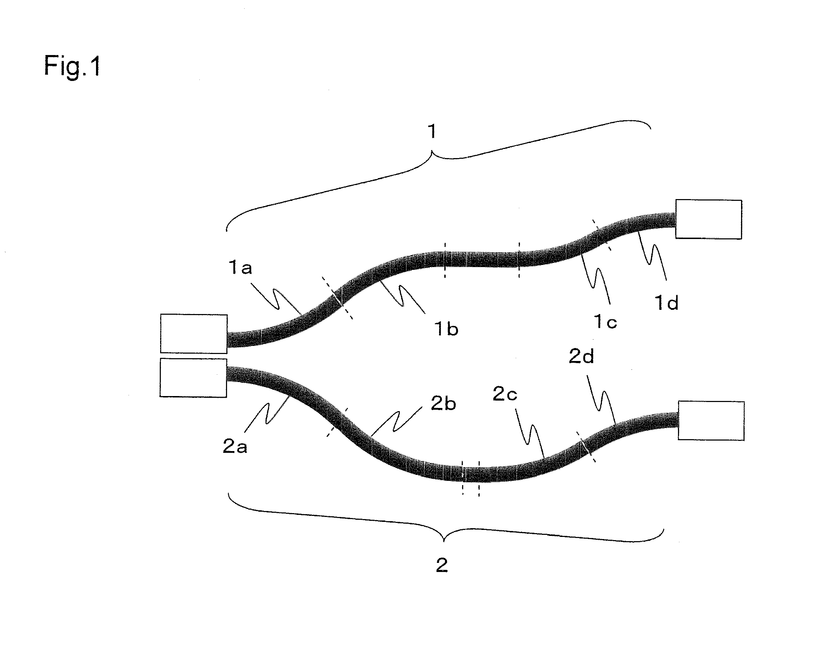

Fig. 1 is a schematic diagram which shows the configuration of the optical waveguide of an exemplary embodiment of the present invention. Optical waveguides 1 and 2 shown in Fig. 1 are a pair of optical waveguides having curved sections and the curved sections include at least arcuate waveguide portions 1a-1d and 2a-2d of the same curvature.

Each of the pair of optical waveguides 1 and 2 has the same number of the arcuate waveguide portions 1a-1d and 2a-2d.

Each of the pair of optical waveguides 1 and 2 of Fig. 1 includes the curved waveguides whose curved sections have the same curvature. In the curved waveguide of the same curvature, the electric field strength peak position aberration amount of the propagating light from the waveguide center can be considered to be the same, and the waveguide center and the electric field strength peak position are considered to be identical in the straight waveguide part. Accordingly, this electric field strength peak position aberration amount will arise only in the curved waveguide portion. Accordingly, when each of the pair of optical waveguides 1 and 2 has the same number of the curved waveguide portions, the fluctuation of the optical path length difference by the electric field strength peak position aberration is offset in terms of the optical path length difference of respective optical waveguide pairs. Even if the electric field strength peak position aberration amount has been apart from the design value, the deviation of the optical path length difference can be suppressed effective since the amount is still offset. On the other hand, the number and the length of the straight waveguide portions that the optical waveguides 1 and 2 include do not affect the fluctuation of optical path length.

In the case that the above-mentioned electric field strength peak position aberration amount has been apart from the designed value caused by the design precision and the manufacturing dispersion, the estrangement caused by the design precision is considered to be fixed amount as far as the manufacturing is based on the design. On the other hand, in terms with the estrangement caused by the manufacturing dispersion, it is considered that the density deviation or the etching rate fluctuation of the material doped in the silicon oxide film which composes the optical waveguide is its factor. Even if there is a fluctuation for each manufacturing lot and substrate, it is considered that these process factors do not give so much fluctuation in the same substrate. Accordingly, the amount of the estrangement which occurs in the similar structure section is considered to be almost the same if it is in the same substrate. For this reason, it is considered that the estrangement amount is offset and the influence to the optical path length difference of the optical waveguide pairs almost disappears.

Further, while combination of the arcuate waveguide portion and the straight waveguide portion is exemplified in Fig. 1 as the optical waveguides 1 and 2, the same number of the same shape waveguide portions, which are the curved waveguide portions whose shape is other than arc, may be included in optical waveguide 1 and 2. If the shape is the same, even though it is not the simple arc shape, the electric field strength peak position aberration amount is considered to be still the same. If the numbers included in optical waveguides 1 and 2 are same, the fluctuation of the optical path length difference becomes zero since the electric field strength peak position aberration amount is offset.

As described above, according to this embodiment, the optical path length difference of a pair of the optical waveguides with combination of many curved waveguide portions can also be correctly controlled.

### [The second exemplary embodiment]

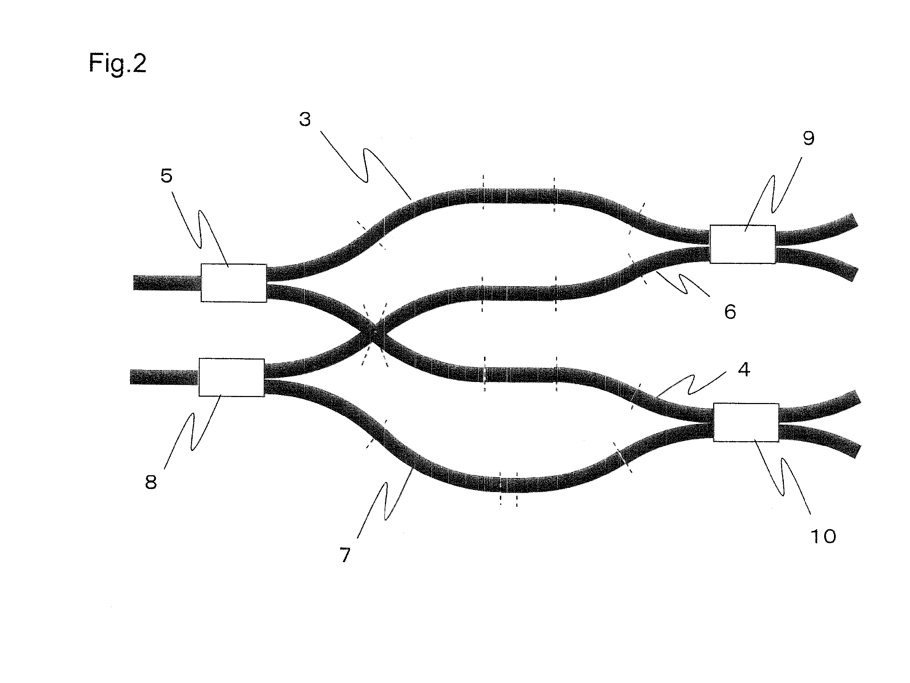

Fig. 2 is a schematic diagram which shows the configuration of the optical waveguide of the second exemplary embodiment of the present invention. This optical waveguide includes optical splitting device 5 which divides the first input light and outputs to optical waveguides 3 and 4 and optical splitting device 8 which divides the second input light and outputs to optical waveguides 6 and 7. Furthermore, it is equipped with optical coupling and splitting device 9 which, after coupling the light propagating through optical waveguides 3 and 6, divides and outputs the coupled light and optical coupling and splitting device 10 which, after coupling the light propagating through optical waveguides 4 and 7, divides and outputs the coupled light. Optical waveguides 3, 4, 6 and 7 have curved sections. In the pair of waveguides 3 and 4, and the pair of waveguides 6 and 7, the curved sections are composed of the arcuate waveguides which have the same curvature. In addition, the number of the arcuate waveguide portions which compose the curved sections. And the optical path lengths of the pair of optical waveguides 3 and 4 are equal while the optical path length of optical waveguide 7 is longer by λ/(2n) than the optical path length of optical waveguide 6, in terms of optical waveguides which construct a 90 degree optical hybrid interferometer. Herein, n is the equivalent refractive index of the optical waveguide and λ is the wavelength of the waveguide light. If the pair of optical waveguides 3 and 4 is equal in optical path length, they may be different in shape each other.

The present exemplary embodiment shows the 90 degree optical hybrid interferometer with a combination of two optical waveguides of the first embodiment of the present invention mentioned above. The 90 degree optical hybrid interferometer requires the waveguide layout with the complicated shape, and the optical path length differences of two optical waveguide pairs needs to be correctly controlled. Accordingly, merit of the present exemplary embodiment obtained by applying the optical waveguide of this present invention to the 90 degree optical hybrid interferometer is large in particular.

### [The third exemplary embodiment]

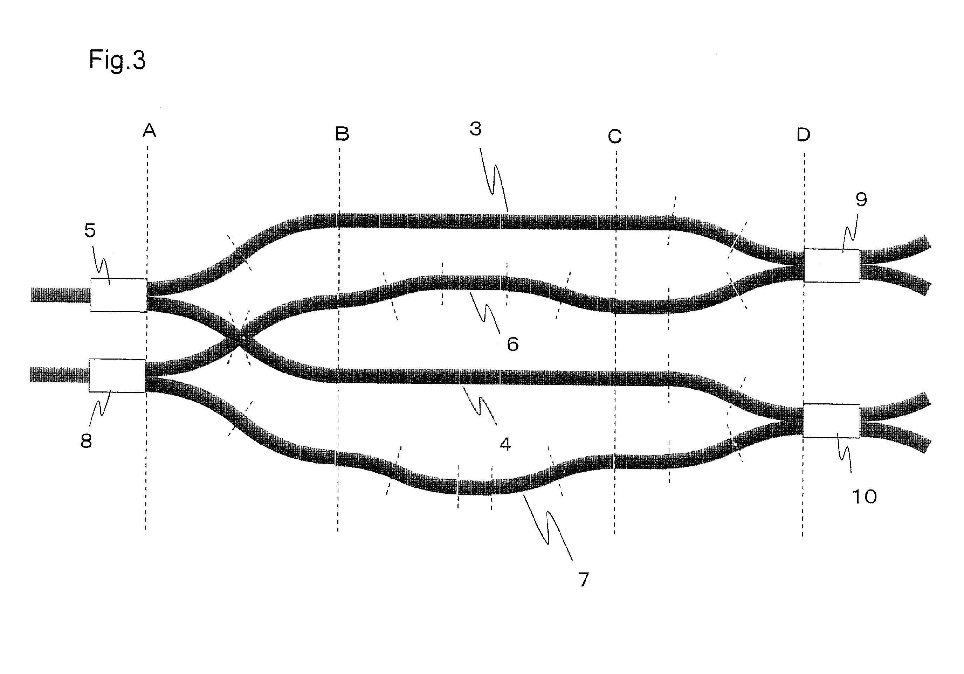

Next, the third exemplary embodiment of the present invention will be described with reference to a drawing. Fig. 3 is a schematic diagram which shows the configuration of the optical waveguide of the third embodiment of the present invention. The same number is attached in Fig. 3 for the components corresponding to those in Fig. 2. In the pair of waveguides 3 and 4 and the pair of waveguides 6 and 7 of the optical waveguide circuit of Fig. 3, the curved sections are composed of the arcuate waveguides which have the same curvature, similar to Fig.2. In addition, the number of said arcuate waveguide portions which compose the curved sections. And the optical path lengths of the pair of optical waveguides 3 and 4 are equal while the optical path length of optical waveguide 7 is longer by λ/(2n) than the optical path length of optical waveguide 6, in terms of optical waveguides which construct the 90 degree optical hybrid interferometer. Herein, n is the equivalent refractive index of the optical waveguide and λ is the wavelength of the waveguide light.

Here, the optical waveguides 6 and 7 are different in the shape only between B-C. The optical path length difference is set by the arc section length of this part or the straight section length. On the other hand, both of optical waveguide shapes are the same between C-D while both have the same shapes and the reversed structure between A-B. Both have the structure that reversed by the same shape and are the identical shape at a remaining part between the A-B about optical waveguide 3 and 4.

In Fig. 3, the distance between A-D is set to be almost 3mm and the distance between B-C is set to be almost 500µm, for example. Optical waveguide has the optical path length which is longer by 0.265µm than optical waveguide 4. Here, when the optical path length difference between optical waveguides 6 and 7 is formed between A-D, the length of the optical waveguide needs to be controlled to become 0.265µm as the length of optical waveguide for the distance almost 3mm between A-D. Accordingly, concerning a photo mask which is used on patterning the optical waveguide core, when the resolution of the mask data is low and the drawing precision is insufficient, the optical path length difference cannot be given appropriately. In contrast, when the optical path length difference between optical waveguides 6 and 7 is formed between B-C, 0.265µm shall be controlled for the distance of about 500µm between B-C, and the photo mask with the high drawing precision gets unnecessary in particular.

As described above, because the shapes are different each other only in the limited section, and the optical path length difference is also formed in the section according to the present exemplary embodiment, the precision to be requested for manufacturing can be loosed and the designing also gets easy in a pair of optical waveguides.

### [The fourth exemplary embodiment]

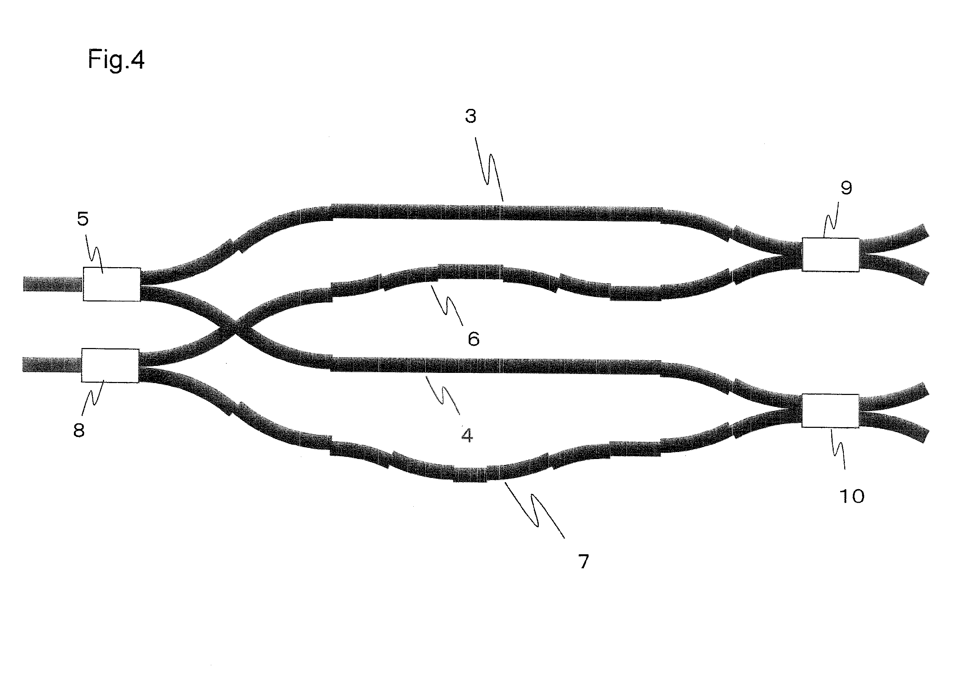

Next, the fourth exemplary embodiment of the present invention will be described with reference to a drawing. Fig. 4 is a schematic diagram which shows a configuration of the optical waveguide circuit of the fourth exemplary embodiment of the present invention. The same number is attached in Fig. 4 for the components corresponding to those in Fig. 3. The optical waveguide circuit of Fig. 4 also composes a 90 degree optical hybrid interferometer similar to Fig. 3. Here, while the second exemplary embodiment focuses at only the optical length, the compensation of the mismatch of the electric field strength peak position is also considered in the third embodiment. That is, the optical waveguide circuit of Fig. 4 is the same as the nominal contour of the optical waveguide shown in Fig. 3. However, in order to compensate the mismatch of electric field strength peak position which occurs in the point where the bending direction changes the offsets (steps) from the nominal contour is implemented at these portions. This offset is formed by making the arc sections or the joint portion of the arc section and the straight section to be slid from its nominal contour. The offset at the inflection point which is implemented between the arcs may be configured by changing the curvature radius of both or any one of the arcs by the length corresponding to the offset amount.

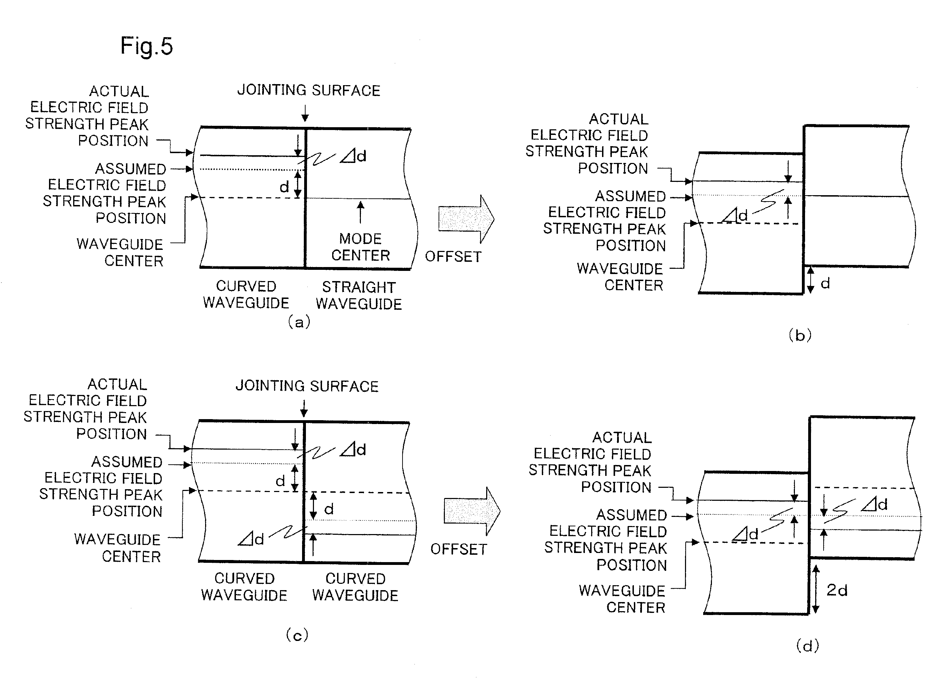

In the joint portion between the curved waveguide and the straight line waveguide, and the joint portion of the curved waveguides, Fig. 5 indicates the example that the coincidence of the electric field strength peak positions is achieved by setting the step (offset) from the nominal contour for the one. Here, d is the gap between the optical waveguide center and the electric field strength peak, and Δd is the difference of the electric field strength peak position.

This offset matches the assumed electric field strength peak positions by being set at the part where the curve direction of the optical waveguide changes as shown in Fig. 4. In this way, by setting up the offset, the coupling loss in the part, where the curve direction changes, is suppressed substantially. Further, as shown in Fig. 5, when the gap of the actual electric field strength peak and the waveguide center has shifted by Δd from the calculated value, it results in some coupling loss. However, a pair of optical waveguides 1 and 2 and a pair of optical waveguides 4 and 5 have the same number of curved waveguide portions, the fluctuation of the optical path length difference caused by the electric field strength peak position aberration Δd is offset and then the optical path length difference does not change, as mentioned above.

As described above, in addition to the suppression of the fluctuation of the optical path length difference being enabled, the effect is provided that the generated optical coupling loss can be suppressed at the point where the bending direction changes in the present exemplary embodiment similar to the third exemplary embodiment.

### [The fifth exemplary embodiment]

A manufacturing method of optical waveguides according to the fifth exemplary embodiment of the present invention is a manufacturing method of a pair of optical waveguides having curved sections and is characterized by that the curved section has the shape with an arcuate waveguide having the same curvature and the number of said arcuate waveguide portions of respective optical waveguides are set to be equal in a pair of the optical waveguides.

(Supplementary note 1) A pair of optical waveguides comprising curved sections,
wherein the curved section has the shape including arcuate waveguide portions which have the same curvatures, and
wherein the optical waveguides have the same number of the arcuate waveguide portions.

(Supplementary note 2) The optical waveguides according to Supplementary note 1, further comprising a step structure, in the joint portion where the inflection point is formed by the arcuate waveguide portions and the joint portion between said curved waveguide section and the straight waveguide section, in which the outer part of the arc of the arcuate waveguide portion is slid to the direction of the center of the other pointed waveguide by the width corresponding to the mismatch amount of the electric field strength peak position that is generated at the joint portion.

(Supplementary note 3) The optical waveguides according to Supplementary note 2, wherein the step structure is implemented at the joint portion giving the inflection point by changing the curvature radius of the arcuate waveguide portion in the joint portion giving said inflection point.

(Supplementary note 4) The optical waveguides according to any one of Supplementary notes 1 to 3, wherein the pair of optical waveguides include predetermined optical path length difference.

(Supplementary note 5) The optical waveguides according to any one of Supplementary notes 1 to 3, wherein the pair of optical waveguides have the same optical path length and the different shapes.

(Supplementary note 6) The optical waveguides according to any one of Supplementary notes 1 to 5, wherein the optical path length difference of the pair of optical waveguides is adjusted by the length of at least one of the arcuate waveguide and the straight waveguide part which compose the optical waveguides.

(Supplementary note 7) An optical waveguide device comprising the optical waveguides according to any one of Supplementary notes 1 to 6.

(Supplementary note 8) A manufacturing method of a pair of optical waveguides including curved sections, comprising:
forming the curved sections to include arcuate waveguide portions of the same curvatures; and
forming the same number of the arcuate waveguide portions for each of optical waveguides.

(Supplementary note 9) The manufacturing method of optical waveguides according to Supplementary note 8, further comprising forming a step structure, in the joint portion where the inflection point is formed by the arcuate waveguide portions and the joint portion between said curved waveguide section and the straight waveguide section, in which the outer part of the arc of the arcuate waveguide portion is slid to the direction of the center of the other pointed waveguide by the width corresponding to the mismatch amount of the electric field strength peak position that is generated at the joint portion.

(Supplementary note 10) The manufacturing method of optical waveguides according to Supplementary note 9, wherein the step structure is implemented at the joint portion giving the inflection point by changing the curvature radius of the arcuate waveguide portion in the joint portion giving said inflection point.

(Supplementary note 11) The manufacturing method of optical waveguides according to any one of Supplementary notes 8 to 10, wherein the pair of optical waveguides include predetermined optical path length difference.

(Supplementary note 12) The manufacturing method of optical waveguides according to any one of Supplementary notes 8 to 10, wherein the pair of optical waveguides have the same optical path length and the different shapes.

(Supplementary note 13) The manufacturing method of optical waveguides according to any one of Supplementary notes 8 to 12, wherein the optical path length difference of the pair of optical waveguides is adjusted by the length of at least one of the arcuate waveguide and the straight waveguide part which compose the optical waveguides.

(Supplementary note 14) A manufacturing method of an optical waveguide device in which a manufacturing method of optical waveguides according to any one of Supplementary notes 8 to 13 is used for manufacturing.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2010-060505, filed on March 17, 2010, the disclosure of which is incorporated herein in its entirety by reference.

### INDUSTRIAL APPLICABILITY

In the above-mentioned example, while the case has been described that the present invention is applied to a 90 degree optical hybrid interferometer, the present invention is not limit to this application and is also suitably applied to an optical waveguide device which requires the control of the deviation of the optical path length difference.

### REFERENCE SIGNS LIST

1 Optical waveguide
1a-1d Optical waveguide part
2 Optical waveguide
2a-2d Optical waveguide part
3 Optical waveguide
4 Optical waveguide
5 Optical splitting device
6 Optical waveguide
7 Optical waveguide
8 Optical splitting device
9 Optical coupling and splitting device
10 Optical coupling and splitting device
11 Optical splitting device
12 Optical splitting device
13 Optical waveguide arm
14 Optical waveguide arm
15 Optical waveguide arm
16 Optical waveguide arm
17 Optical coupler
18 Optical coupler

## Claims

1. A pair of optical waveguides comprising curved sections,
wherein the curved section has the shape including arcuate waveguide portions which have the same curvatures, and
wherein the optical waveguides have the same number of the arcuate waveguide portions.

2. The optical waveguides according to claim 1, wherein the pair of optical waveguides include predetermined optical path length difference.

3. The optical waveguides according to claim 1, wherein the pair of optical waveguides have the same optical path length and the different shapes.

4. The optical waveguides according to claim 2, wherein the optical path length difference of the pair of optical waveguides is adjusted by the length of at least one of the arcuate waveguide and the straight waveguide part which compose the optical waveguides.

5. The optical waveguides according to claim 2 or 4, wherein the pair of optical waveguides having the optical path length differences include an optical waveguide part which composes the curved sections by the combination of the same number of the arcuate waveguide portions having the same length and an optical waveguide part which composes the curved sections by the combination of the same number of the arcuate waveguide portions having the different lengths.

6. The optical waveguides according to any one of claims 1 to 5, further comprising a step structure, in the joint portion where the inflection point is formed by the arcuate waveguide portions and the joint portion between said curved waveguide section and the straight waveguide section, in which the outer part of the arc of the arcuate waveguide portion is slid to the direction of the center of the other pointed waveguide by the width corresponding to the mismatch amount of the electric field strength peak position of a propagated light that is generated at the joint portion.

7. The optical waveguides according to claim 6, wherein the step structure is implemented at the joint portion giving the inflection point by changing the curvature radius of the arcuate waveguide portion by the width corresponding to the mismatch amount of the electric field strength peak position in the joint portion giving said inflection point.

8. Optical waveguides comprising first and second optical waveguide pairs each of which comprises the optical waveguides according to any one of claims 1 to 7, and in which at least one of the first and the second optical waveguide pairs has a predetermined optical path length difference.

9. An optical waveguide device comprising:
first light splitting means that divides first input light and outputs to first and second optical waveguides;
second light splitting means that divides second input light and outputs to third and fourth optical waveguides;
first optical coupling and splitting means that, after coupling the light propagating through the first and the third optical waveguides, divides and outputs the coupled light; and
second optical coupling and splitting means that, after coupling the light propagating through the second and the fourth optical waveguides, divides and outputs the coupled light;
wherein the optical waveguide pair including the first and the second optical waveguides has a pair of optical waveguides according to any one of claims 2, 4 and 5, and the optical waveguide pair including the third and the fourth optical waveguides has a pair of optical waveguides according to claim 3.

10. The optical waveguide device according to claim 9, further comprising a step structure, in the joint portion where the inflection point is formed by the arcuate waveguide portions and the joint portion between the curved waveguide section and the straight waveguide section, in which the outer part of the arc of the arcuate waveguide portion is slid to the direction of the center of the other pointed waveguide by the width corresponding to the mismatch amount of the electric field strength peak position of a propagated light that is generated at the joint portion, wherein the arcuate waveguide portions compose the curved sections of the first and fourth optical waveguides.

11. The optical waveguide device according to claim 10, wherein the step structure is implemented at the joint portion giving the inflection point by changing the curvature radius of the arcuate waveguide portion by the width corresponding to the mismatch amount of the electric field strength peak position in the joint portion giving said inflection point.
